Europäisches Patentamt

European Patent Office

Office européen des brevets

(11) Publication number: **0 271 903**
**A2**

## (12) EUROPEAN PATENT APPLICATION

(21) Application number: **87118695.3**

(22) Date of filing: **16.12.87**

(51) Int. Cl.⁴: **B25B 23/147 , B25B 23/151**

(30) Priority: **17.12.86 GB 8630106**

(43) Date of publication of application:
**22.06.88 Bulletin 88/25**

(84) Designated Contracting States:
**AT BE CH DE ES FR GR IT LI LU NL SE**

(71) Applicant: **SPS TECHNOLOGIES, INC.**
**Newtown-Yardley Road**
**Newtown Pennsylvania 18940(US)**

(72) Inventor: **Butler, John F.**
**Blessington Road**
**Naas(IE)**

(74) Representative: **Patentanwälte Grünecker,**
**Kinkeldey, Stockmair & Partner**
**Maximilianstrasse 58**
**D-8000 München 22(DE)**

(54) Apparatus for tightening screw-threaded fasteners.

(57) In a method of tightening screw-threaded fasteners for producing workpiece joints by using a power driven rotary tightening tool the snug point of the fastener is determined by detecting a speed reduction of rotatable parts of the tightening tool when the snug point is reached. An apparatus for tightening the screw-threaded fastener comprises a power-driven rotary tightening tool including an induction motor, an inverter control circuit and a further control circuit capable of determining a reduction in speed of the motor indicative of the snug point, said further control circuit including a proximity detector responsive to the passage of a rotating metallic part of the motor or of a metallic part driven by the motor.

EP 0 271 903 A2

## APPARATUS FOR TIGHTENING SCREW-THREADED FASTENERS

The invention relates to apparatus for tightening screw-threaded fasteners.

Screw-threaded fasteners are conventionally-tightened, where they are employed in production on an assembly line, by using a powerdriven rotary tightening tool by whichthe amount of tightening of a fastener is controlled by detecting a function of tightening, such as a torque exerted in the fastener, the angle of turning of the fastener, the tension exerted in the fastener and the yield in the fastener, monitoring said function of tightening by a transducer and stopping the motor producing the tightening torque when the transducer has detected that the tightening has reached the required amount. Alternatively, the amount of tightening may be controlled by allowing the motor to stall when a predetermined torque has been reached.

When a screw-threaded fastener is being tightened, the tightening tool has to be turned through an initial angle, which may be greater than one complete turn, before effecting engagement of the joint to the point where further turning of the fastener will commence to tighten the fastener itself. The point at which tightening of the fastener itself commences is usually termed the "snug point" and the corresponding torque the "snug torque".

It is desirable for the operator to know when the snug point has been reached and the actual tightening of the fastener itself has commenced.

According to the invention, apparatus for tightening a screw-threaded fastener comprises a power-driven rotary tightening tool including an induction motor providing the rotary power output of the tool, an inverter control circuit, whereby the speed of the introduction motor is controllable independently of the frequency of the power supply thereto, and a further control circuit capable of determining a reduction in speed of the motor indicative of the fastener having reached the snug point, as hereinbefore defined, said further control circuit including a proximity detector responsive to the passage of a rotating metallic part of the motor or of a metallic part driven by the motor.

The proximity detector may be positioned adjacent the blades of a cooling fan driven by the motor, whereby each time a blade of the fan passes the proximity detector, the latter will give an output pulse, said further control circuit being responsive to the frequency of a succession of said output pulses and therefore to the rotational speed of the motor.

When the snug point has been detected, the fastener may be driven at slow speed by the motor until other means which are not the concern of this invention have determined that the fastener has been tightened to a required torque following the attainment of the snug point. Such means may be responsive to torque; angle of turning of the fastener; tension exerted in the fastener; yield of the fastener, or stall of the motor.

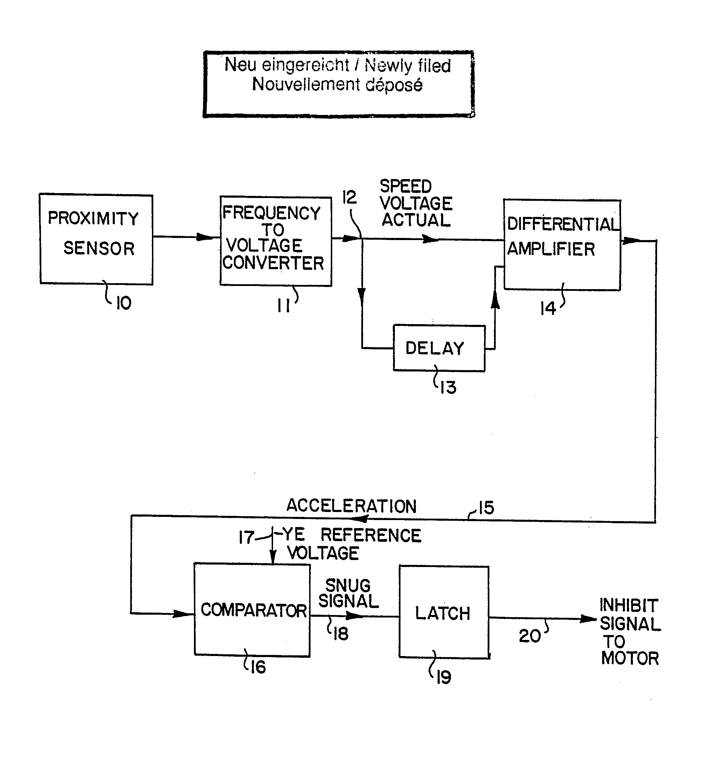

By way of example, a circuit for detecting when the snug point of a joint including a screw-threaded fastener has been reached is shown in the accompanying drawing.

Referring to the drawing, the circuit includes a proximity sensor 10 responsive to the passage past it of metal. The proximity sensor 10 is positioned adjacent the blades of a cooling fan of the motor so that each time a blade of the fan passes the proximity sensor 10, the latter will produce a pulse. For example, where the fan has fifteen blades and the motor output shaft driving the fan includes a 100:1 gear ratio, 1500 pulses are emitted per revolution of the motor output shaft. These pulses are applied to a Frequency to Voltage Converter 11 which produces an actual voltage signal dependent on speed at 12. A branch from the output from the converter 11 is fed via a delay circuit 13. The actual voltage signal and the delay signal are applied as inputs to a Differential Amplifier 14. This gives an output signal at 15 which is indicative of acceleration of the motor output shaft.

A negative value at 15 represents deceleration. This is applied as an input to a comparator circuit 16 which also has a negative reference voltage input 17. Thus an output signal from the comparator at 18 indicates when the snug point has been reached. This may be used to indicate to the operator that the snug point has been reached; to apply a control signal to the inverter control circuit to enable the motor to continue to drive at a controlled speed or where the motor is to be allowed to stall to apply an inhibit signal to the motor at 20. In the latter case, to prevent automatic restart of the motor, the signal at 18 is applied to the motor via a latch circuit 19.

The motor and its control circuits may be incorporated in a handheld tightening tool such as a right-angle nut runner. This may be provided with a multi-function selector switch to effect a required method of controlling tightening after the snug point has been reached or to operate reverse turning of the tool in an untightening mode.

## Claims

1. Method for tightening screw-threaded fasteners for producing workpiece-joints by using a power-driven rotary tightening tool, characterized in that the snug point of the joint is determined by significant reduction in speed of the motor of the tightening tool.

2. Method according to claim 1, characterized in that the fastener is driven at slower speed after the snug point has been detected, compared with the driving speed prior to the detection of the snug point.

3. Apparatus for tightening a screw-threaded fastener for producing workpiece joints, comprising a power-driven rotary tightening tool with a driving motor (4) providing the rotary power output of the tool, characterized in that the driving motor (4) is an induction motor associated with an inverter control circuit in order to control the speed of the induction motor independently of the frequency of the power supply, and that a further control circuit is provided being capable of determining a reduction in speed of the induction motor indicative of the snug-point of the joint, and that said further control circuit includes a proximity detector (10) responsive to the passage of a rotating metallic part of the induction motor or of a metallic part driven by the induction motor.

4. Apparatus according to claim 2, characterized in that the proximity detector is positioned adjacent the blades of a cooling fan driven by the induction motor, and that said further control circuit being responsive to the frequency of a succession of output pulses of the proximity detector and therefore to the rotational speed of the induction motor.

5. Apparatus according to claim 2, characterized by means responsive to torque, responsive to angle of turning of the fastener, responsive to tension excerted in the fastener, responsive to yield of the fastener, or responsive to stall of the motor.

6. Apparatus according to claims 3 and 4, characterized in that the proximity detector (10) is connected to a frequency to voltage converter (11), that the output of said converter (11) is connected via a delay circuit (13) to a differential amplifier (14) for producing output signals indicative of acceleration of the motor output shaft, and that a point (15) of the circuit is connected with a comparator circuit (16) having a second negative reference voltage input (17) for producing an output signal at point (18) indicating reaching the snug point.

7. Apparatus according to claim 6, that the output of comparator (16) is connected at point (18) to an inverter control circuit.

8. Apparatus according to claim 7, characterized in that between the comparator (16) and the motor (20) a latch circuit (19) is provided.

9. Apparatus according to at least one of claims 2 to 7, characterized in that the tightening tool is a right-angle nut runner.

10. Apparatus according to claim 9, characterized in that a multi-function selector switch is provided to effect a required method of controlling tightening after the snug point has been reached or to operate reverse turning of the tool in an untightening mode.

PROXIMITY SENSOR
10

FREQUENCY TO VOLTAGE CONVERTER
11

12

SPEED VOLTAGE ACTUAL

DIFFERENTIAL AMPLIFIER
14

DELAY
13

ACCELERATION
15

17 —YE REFERENCE VOLTAGE

COMPARATOR
16

SNUG SIGNAL
18

LATCH
19

20

INHIBIT SIGNAL TO MOTOR